# EUROPEAN PATENT APPLICATION

(11) **EP 4 485 977 A1**
(43) Date of publication of application: **01.01.2025**
(21) Application number: 24185314.2
(22) Date of filing: 28.06.2024
(51) Int. Cl.: H04S 7/00

(54) **LOUDSPEAKER POSITION DETERMINATION BASED ON ROOM IMPULSE RESPONSE**

(30) Priority: 29.06.2023 GR 20230100526; 07.09.2023 GB 202313624
(71) Applicant: B&W Group Ltd, West Sussex BN11 2BH (GB)
(72) Inventor: VALAVANIS, Vassilis, London (GB); O BRIEN, Thomas, Brighton and Hove (GB)
(74) Representative: Abel & Imray LLP

(57) **Abstract**

An electronic device comprises a loudspeaker. The electronic device is operable to perform playback of audio content, via the loudspeaker, based on an audio playback parameter of the electronic device. Data representing a measurement of an impulse response of an environment in which the electronic device is located is received. The received data is processed to obtain output data indicative of a location, within the environment, of the electronic device. The output data is obtained via an artificial neural network trained to determine the location using the measurement of the impulse response. The audio playback parameter of the electronic device is determined based on the obtained output data.

## Description

### Technical Field

The present disclosure concerns operating an electronic device. In particular, but not exclusively, the present disclosure concerns measures, including apparatus, methods and computer programs, for operating an electronic device comprising a loudspeaker, the electronic device being operable to perform playback of audio content.

### Background

Various types of electronic device are capable of performing playback of audio content. Examples of such electronic devices include smart speakers, Hi-Fi equipment, televisions, radios, laptop computers, mobile phones, and portable speakers (e.g. Bluetooth speakers). Such a device (which may be referred to as an `audio playback device') may comprise one or more loudspeakers for producing sounds corresponding to the audio content to be played.

The perceived audio quality of a given electronic device may depend on the environment (e.g. the room) in which the electronic device is located. For example, different rooms may have different absorption and/or reflection properties that affect audio signals generated by the electronic device, and thus affect a listening experience. Some audio playback devices may have adjustable audio playback parameters, e.g. frequency and/or time response parameters, for optimising the perceived audio quality of the device for a given environment.

It is desirable to provide an improved electronic device and/or improved methods of operating an electronic device.

### Summary

According to an aspect of the present disclosure, there is provided a method of operating an electronic device comprising a loudspeaker, the electronic device being operable to perform playback of audio content, via the loudspeaker, based on an audio playback parameter of the electronic device, the method comprising: receiving data representing a measurement of an impulse response of an environment in which the electronic device is located; processing the received data to obtain output data indicative of a location, within the environment, of the electronic device, wherein the output data is obtained via an artificial neural network trained to determine the location using the measurement of the impulse response; and determining the audio playback parameter of the electronic device based on the obtained output data.

According to another aspect of the present disclosure, there is provided an electronic device comprising: a controller; and a loudspeaker, the electronic device being operable to perform playback of audio content, via the loudspeaker, based on an audio playback parameter of the electronic device, wherein the controller is configured to: receive data representing a measurement of an impulse response of an environment in which the electronic device is located; process the received data to obtain output data indicative of a location, within the environment, of the electronic device, wherein the output data is obtained via an artificial neural network trained to determine the location using the measurement of the impulse response; and determine the audio playback parameter of the electronic device based on the obtained output data.

According to another aspect of the present disclosure, there is provided a computer program comprising a set of instructions which, when executed by a computerised device, cause the computerised device to perform a method of operating an electronic device, the electronic device comprising a loudspeaker, the electronic device being operable to perform playback of audio content, via the loudspeaker, based on an audio playback parameter of the electronic device, the method comprising: receiving data representing a measurement of an impulse response of an environment in which the electronic device is located; processing the received data to obtain output data indicative of a location, within the environment, of the electronic device, wherein the output data is obtained via an artificial neural network trained to determine the location using the measurement of the impulse response; and determining the audio playback parameter of the electronic device based on the obtained output data.

It will of course be appreciated that features described in relation to one aspect of the present invention may be incorporated into other aspects of the present invention. For example, a method of the invention may incorporate any of the features described with reference to an apparatus of the invention and *vice versa.*

### Brief description of the drawings

Embodiments of the present disclosure will now be described by way of example only with reference to the accompanying drawings, of which:
Figure 1 is a perspective view of an electronic device according to embodiments;
Figure 2 is a schematic diagram of a system including an electronic device according to embodiments;
Figure 3 is a schematic diagram of an electronic device according to embodiments;
Figure 4 is a flow diagram showing a method of operating an electronic device according to embodiments; and
Figure 5 is a schematic diagram of an environment according to embodiments.

### Detailed Description

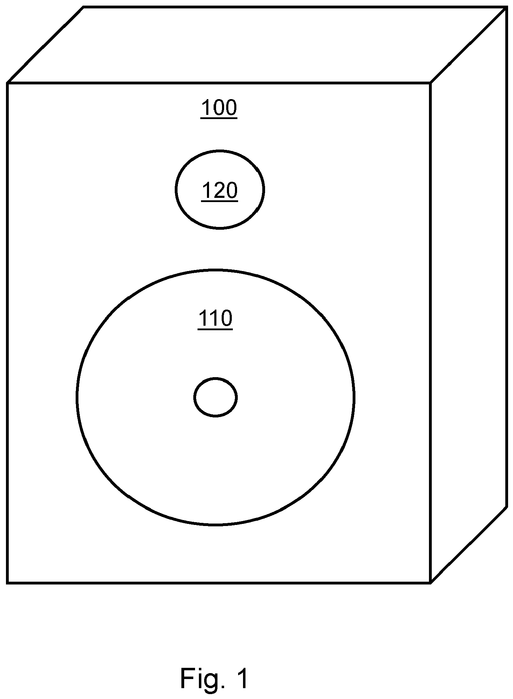

Figure 1 shows a perspective view of an electronic device 100, according to embodiments. The electronic device 100, and/or components thereof, may be used to implement the methods described herein. The electronic device 100 is operable to perform playback of audio content. The electronic device 100 may thus be referred to as an "audio playback device". It will be understood that the electronic device 100 may be configured to perform other functions in addition to playing audio content. In embodiments, the electronic device 100 comprises a smart speaker device. A smart speaker device comprises an audio playback device with an integrated virtual assistant for interactive control of the device, e.g. via voice commands received from a user. The electronic device 100 may comprise other types of device in alternative embodiments. For example, the electronic device 100 may comprise a laptop computer, mobile phone, tablet computer, robotic device, television, Hi-Fi device, radio, sound bar, ceiling speaker, floor standing speaker, bookshelf speaker, electronic musical instrument, etc.

The electronic device 100 comprises a loudspeaker 110. The loudspeaker 110 is operable to convert electrical signals into corresponding sounds. In embodiments, the electronic device 100 comprises a plurality of loudspeakers, e.g. for generating sounds having different frequency ranges.

In the embodiments shown in Figure 1, the electronic device 100 also comprises a microphone 120. The microphone 120 is an example of sensor equipment. The microphone 120 is operable to convert sounds into electrical signals. The microphone 120 may be used to measure an impulse response of an environment of the electronic device 100, e.g. a frequency response, as will be described in more detail below. In embodiments, the electronic device 100 comprises a plurality of microphones, e.g. an array of microphones.

In alternative embodiments, the electronic device 100 does not comprise the microphone 120. For example, the microphone 120 may be comprised in a further electronic device (not shown). In such embodiments, the electronic device 100 may receive, from the further electronic device, data representing a measurement of the impulse response of the environment, measured using the microphone 120.

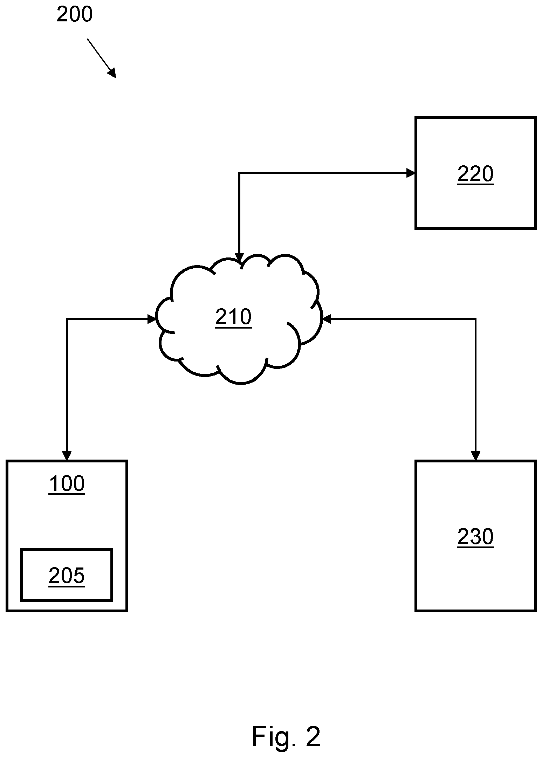

Figure 2 shows a schematic diagram of a system 200, according to embodiments. The system 200 comprises the electronic device 100 described above with reference to Figure 1. The electronic device 100 is operable to send and receive data via a communications network 210. The communications network 210 may comprise a wireless communications network, such as the Internet, for example.

In the embodiments shown in Figure 2, the electronic device 100 comprises a communications unit 205. In embodiments, the communications unit 205 comprises a wireless communications unit, such as a wireless transceiver. In embodiments, the electronic device 100 can send and/or receive data via the communications network 210 through use of the communications unit 205. In embodiments, the communications unit 205 comprises a Bluetooth transceiver.

In alternative embodiments, the electronic device 100 comprises a communications unit that is not configured to perform wireless communications. For example, such a communications unit may be configured to allow communications between devices via an Ethernet connection, or other wired communications mechanism.

The system 200 also comprises a server 220. The server 220 is remotely located from the electronic device 100. The server 220 is operable to send and/or receive data via the communications network 210. As such, the server 220 is operable to receive data from the electronic device 100 and/or send data to the electronic device 100. The server 220 may be used to facilitate operation and/or control of the electronic device 100, in some embodiments.

In embodiments, the system 200 also comprises a further electronic device 230. The further electronic device 230 may be operable to perform playback of audio content, and may thus be referred to as a further audio playback device. The further electronic device 230 may comprise a smart speaker, for example. In other embodiments, the further electronic device 230 is not operable to perform playback of audio content. The further electronic device 230 may be located in the same environment (e.g. room) as the electronic device 100. The further electronic device 230 is operable to send and/or receive data via the communications network 210. For example, the further electronic device 230 may be operable to receive data from the server 220 and/or receive data directly or indirectly from the electronic device 100. In embodiments, the electronic device 100 is configured to communicate with the further electronic device 230 directly, additionally or alternatively to communicating via the server 220. For example, the electronic device may be configured to communicate with the further electronic device 230 via Bluetooth. The further electronic device 230 may be used to facilitate operation and/or control of the electronic device 100, in some embodiments. Similarly, the electronic device 100 may be configured to control the further electronic device 100.

In alternative embodiments, operation and/or control of the electronic device 100 is performed directly (i.e. locally) on the electronic device 100. As such, in some embodiments, the server 220, the further electronic device 230, the communications network 210 and/or the communications unit 205 of the electronic device 100, may be omitted from the system 200.

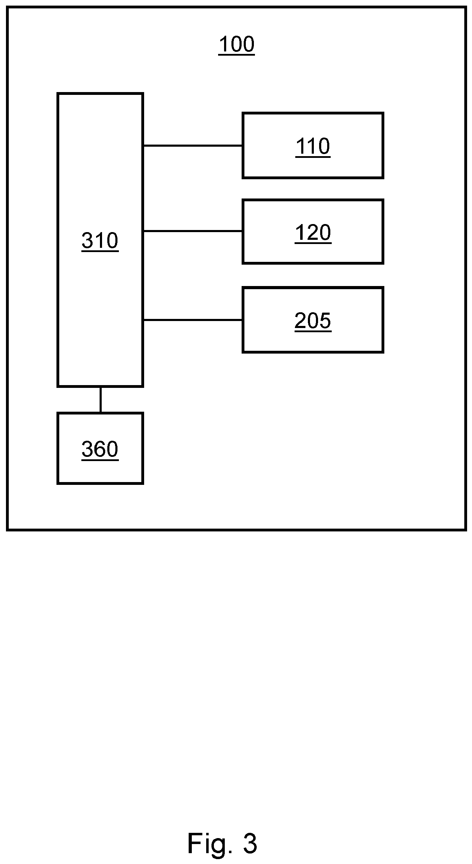

Figure 3 shows a schematic block diagram of the electronic device 100, according to embodiments.

The electronic device 100 comprises a controller 310. The controller 310 is operable to perform various data processing and/or control functions according to embodiments, as will be described in more detail below. The controller 310 may comprise one or more components. The one or more components may be implemented in hardware and/or software. The one or more components may be co-located or may be located remotely from each other in the electronic device 100. The controller 310 may be embodied as one or more software functions and/or hardware modules. In embodiments, the controller 310 comprises one or more processors configured to process instructions and/or data. Operations performed by the one or more processors may be carried out by hardware and/or software. The controller 310 may be configured to implement the methods described herein. In embodiments, the controller 310 is operable to output control signals for controlling one or more components of the electronic device 100. In embodiments, the controller 310 is operable to receive signals from one or more components of the electronic device 100, and to control one or more components of the electronic device 100 based on such received signals.

The electronic device 100 also comprises a loudspeaker 110, as described with reference to Figure 1 above. The controller 310 is operable to control the loudspeaker 110, e.g. via one or more control signals generated by the controller 310. The controller 310 is operable to cause the loudspeaker 110 to provide an audio output, e.g. to facilitate playing of audio content.

In embodiments, the electronic device 100 also comprises a microphone 120, as described with reference to Figure 1 above. The microphone 120 is configured to generate data indicative of a measurement of an impulse response of the environment of the electronic device 100. In embodiments, the microphone 120 is configured to output the generated data to the controller 310, to enable the controller 310 to control the electronic device 100 on the basis of the measurement of the impulse response. As such, the controller 310 is operable to receive data indicative of the measurement of the impulse response from the microphone 120. In embodiments, the controller 310 is operable to control the microphone 120, e.g. via one or more control signals generated by the controller 310.

In embodiments, the electronic device 100 comprises a communications unit 205, as described with reference to Figure 2 above. The controller 310 is operable to control the communications unit 205. In particular, the controller 310 is operable to cause the communications unit 205 to transmit signals to a further device, e.g. via a network.

The electronic device 100 also comprises a memory 360. The memory 360 is operable to store various data according to embodiments. The memory may comprise at least one volatile memory, at least one non-volatile memory, and/or at least one data storage unit. The volatile memory, non-volatile memory and/or data storage unit may be configured to store computer-readable information and/or instructions for use/execution by the controller 310.

The electronic device 100 may comprise more, fewer and/or different components in alternative embodiments. In particular, at least some of the components of the electronic device 100 shown in Figures 1, 2 and/or 3 may be omitted (e.g. may not be required) in some embodiments. For example, at least one of the microphone 120, communications unit 205, and memory 360 may be omitted in some embodiments. In some embodiments, the electronic device 100 does not comprise the controller 310. For example, the controller 310 may be comprised in a further entity (e.g. a server or a further playback device) that is capable of communicating with and controlling the electronic device 100. The electronic device 100 may also comprise other components for realising the function(s) of the electronic device 100, such as one or more of the following components: an amplifier, one or more drivers, a power source, one or more input connectors, an enclosure, one or more adaptors, a crossover network, one or more buttons or other interactive control means, a display device, etc.

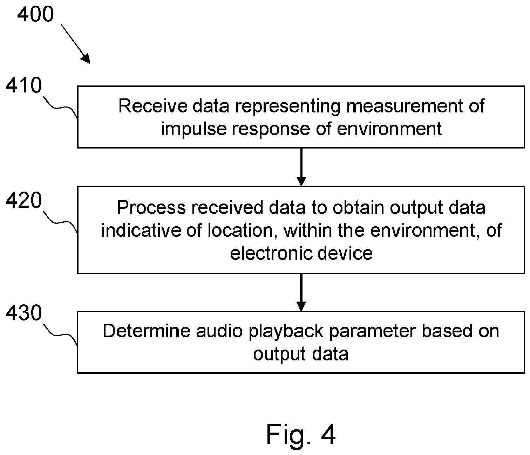

Figure 4 shows a method 400 of operating an electronic device, according to embodiments. The method 400 may be used to operate the electronic device 100 described above with reference to Figures 1 to 3. The electronic device 100 comprises a loudspeaker 110. The electronic device 100 is operable to perform playback of audio content, via the loudspeaker 110, based on an audio playback parameter of the electronic device 100. The audio playback parameter may, for example, relate to a frequency and/or time response of the electronic device 100. In embodiments, the method 400 is performed at least in part by the controller 310. That is, the controller 310 is configured to perform at least some of the steps of the method 400.

In step 410, data is received, the data representing a measurement of an impulse response of an environment in which the electronic device 100 is located.

In step 420, the received data is processed to obtain output data indicative of a location, within the environment, of the electronic device 100. The output data is obtained via an artificial neural network trained to determine the location using the measurement of the impulse response.

In step 430, the audio playback parameter of the electronic device 100 is determined based on the obtained output data.

The method 400 allows the playback performance of the electronic device 100 to be improved and/or tailored to its surroundings, thus improving a listening experience. Audio signals produced by the electronic device 100 (e.g. via the loudspeaker 110) may interact with the environment, creating frequency and time anomalies. Such anomalies may reduce a perceived audio quality of the electronic device 100, e.g. as experienced by a user. Moreover, the interaction of the electronic device 100 with the environment is dependent on the location within the environment of the electronic device 100. That is, an electronic device at a first location in the environment may interact with the environment in a first manner, leading to a first set of frequency/time anomalies, and an otherwise identical electronic device at a second location in the environment may interact with the environment in a second, different manner, leading to a second, different set of frequency/time anomalies. If the location, within the environment, of the electronic device 100 is not accounted for, the performance of the electronic device 100 (e.g. a perceived audio quality of sound produced by the electronic device 100) is sub-optimal. By determining the location of the electronic device 100 within the environment and then taking the location into account when determining the audio playback parameter of the electronic device 100, the performance of the electronic device 100 can be improved, e.g. by tailoring the frequency/time response of the electronic device 100 for that particular location within the environment.

Some known methods for room correction require manual input from a user. For example, the user may be required to take 8-10 measurements in a given room to enable the location of a particular device within the room to be identified. Such measurements may be performed via a separate microphone, or a mobile phone, for example, and may be performed independently of the audio playback device. The method 400 reduces (and may even eliminate) the need for manual input from the user. In particular, by using a trained artificial neural network to determine the location of the electronic device 100 within the environment based on a measurement of an impulse response of the environment, user input is not required. Instead, the electronic device 100 may itself measure the impulse response of the environment (or receive such a measurement from another device), and process such a measurement to estimate the location of the electronic device 100 within the environment. This is more efficient, and provides an improved user experience, compared to methods in which a user is required to perform one or more measurements and/or manually input information to calibrate the electronic device 100.

In embodiments, the obtained output data specifies a determined (e.g. estimated) location of the electronic device 100 within the environment. In alternative embodiments, the obtained output data specifies a value for the audio playback parameter that is to be used, the value being dependent on a determined location of the electronic device 100 within the environment. As such, the obtained output data may directly or indirectly specify a determined location of the electronic device 100 within the environment. In embodiments, the audio playback parameter is adjusted based on the obtained output data. That is, the audio playback parameter may initially have a first value, and a second, different value may then be determined and/or set based on the obtained output data.

In embodiments, the obtained output data is indicative of one or more dimensions of the environment. As such, the obtained output data may be indicative of both the location of the electronic device 100 within the environment and one or more dimensions of the environment. For example, the output data may comprise first data comprising an indication of the one or more dimensions of the environment, and second data comprising an indication of the location of the electronic device 100 within the environment. In other words, the artificial neural network may be configured to determine, from the measurement of the impulse response of the environment, both the dimensions of the environment and the location of the electronic device 100 within the environment. This is more efficient than a case in which separate processes (e.g. separate measurements and/or separate artificial neural networks) are required to determine the dimensions of the environment on the one hand, and the location of the electronic device 100 on the other hand.

The audio playback parameter may thus be determined based on both the location of the electronic device 100 within the environment and one or more dimensions of the environment. This improves the playback performance and/or functionality of the electronic device 100, by allowing the audio playback parameter to be adapted to different spatial and/or environmental configurations. In particular, the acoustic interaction between the electronic device 100 and the environment (e.g. based on absorption, reflection from surfaces, etc.) may be dependent on both the location of the electronic device 100 in the environment and the dimensions of the environment. Accordingly, by adjusting the audio playback parameter based on both of these factors, the acoustic performance of the electronic device 100 can be optimised so as to improve a listening experience.

The one or more dimensions may comprise a height, a width and/or a length of the environment. In embodiments, the obtained output data is indicative of a size of the environment. As such, the artificial neural network may be configured to determine both the size of the environment and the location of the electronic device 100 within the environment, using the measurement of the impulse response of the environment.

In embodiments, the obtained output data is indicative of one or more acoustic characteristics of the environment. In embodiments, the one or more acoustic characteristics comprise one or more absorption coefficients of the environment. In embodiments, the one or more acoustic characteristics comprise one or more frequency and/or time response characteristics of the environment. As such, the obtained output data may be indicative of both the location of the electronic device 100 within the environment and one or more acoustic characteristics of the environment (and optionally also the dimensions and/or size of the environment). For example, the output data may comprise first data comprising an indication of the one or more acoustic characteristics of the environment, and second data comprising an indication of the location of the electronic device 100 within the environment. In other words, the artificial neural network may be configured to determine, from the measurement of the impulse response of the environment, both the acoustic characteristics of the environment and the location of the electronic device 100 within the environment. This is more efficient than a case in which separate processes (e.g. separate measurements and/or separate artificial neural networks) are required to determine the acoustic characteristics of the environment on the one hand, and the location of the electronic device 100 on the other hand. The audio playback parameter may thus be determined based on both the location of the electronic device 100 within the environment and one or more acoustic characteristics of the environment. This improves the playback performance and/or functionality of the electronic device 100, by allowing the audio playback parameter to be adapted to different spatial and/or environmental configurations. In particular, the acoustic interaction between the electronic device 100 and the environment (e.g. based on absorption, reflection from surfaces, etc.) is dependent on both the location of the electronic device 100 in the environment and the acoustic characteristics of the environment. Accordingly, by adjusting the audio playback parameter based on both of these factors, the acoustic performance of the electronic device 100 can be optimised so as to improve a listening experience.

In embodiments, the obtained output data is indicative of an orientation of the electronic device 100 in the environment. That is, the artificial neural network may be configured to determine, from the measurement of the impulse response of the environment, both the location of the electronic device 100 within the environment and the orientation of the electronic device 100 relative to the environment. Since the acoustic interaction between the electronic device 100 and the environment may be dependent on the orientation of the electronic device 100 (e.g. as the loudspeaker 110 faces in a particular direction), adjusting the audio playback parameter based on the orientation of the electronic device 100 can improve the performance of the electronic device 100, and thus improve a listening experience.

In embodiments, the artificial neural network is configured to generate the output data using as an input only a single measurement of the impulse response of the environment. This is more efficient than methods in which multiple impulse or frequency response measurements are required, e.g. at different positions within the environment. In some such embodiments, only the single measurement of the impulse response is used by (i.e. input to) the artificial neural network. In other such embodiments, while the artificial neural network is capable of generating the output data using only a single measurement of the impulse response of the environment, the artificial neural network may receive further measurements of the impulse response of the environment and use such further measurements as additional inputs to generate the output data.

In embodiments, the received data represents a single measurement of the impulse response of the environment. As such, a single measurement of the impulse response of the environment may be used (e.g. processed) to determine the location, within the environment, of the electronic device 100, and consequently to determine the audio playback parameter of the electronic device 100. This is more efficient than a case in which multiple impulse response measurements are required. In alternative embodiments, the received data represents a plurality of measurements of the impulse response of the environment. The use of multiple measurements may increase a reliability and/or accuracy of the determination of the location of the electronic device 100 in the environment.

In embodiments, processing the received data comprises transforming the received data into a frequency domain. For example, processing the received data may comprise applying a Fast Fourier Transform, FFT, to the received data. Once in the frequency domain, the data may be processed using the artificial neural network. The received data may comprise time series data, for example, although in alternative embodiments the received data already comprises frequency data. In alternative embodiments, time series data may be input to the artificial neural network without first transforming the time series data into the frequency domain. In still alternative embodiments, both time and frequency domain data may be input to the artificial neural network.

In embodiments, the audio playback parameter comprises a frequency and/or time response of the electronic device 100. As such, the frequency and/or time response of the electronic device 100 may be determined (and optionally modified) based on the location, within the environment, of the electronic device 100. This improves the performance of the electronic device 100, and thus improves a listening experience, compared to a case in which the location of the electronic device 100 within the environment is not taken into account when determining the frequency and/or time response of the electronic device 100. In embodiments, the audio playback parameter comprises a phase of the electronic device 100.

In embodiments, the method 400 comprises a step (not shown) comprising applying an equalization curve to the electronic device 100 based on the determined audio playback parameter. In other words, the volume of different frequency bands of audio signals produced by the electronic device 100 may be determined and/or adjusted. This improves the performance of the electronic device 100, and thus improves a listening experience, compared to a case in which the location of the electronic device 100 within the environment is not taken into account when applying an equalization curve to the electronic device 100. In embodiments, the method 400 comprises applying digital filtering to the electronic device 100 (i.e. to audio signals produced by the electronic device 100) based on the determined audio playback parameter.

In embodiments, the method 400 comprises a step (not shown) comprising adjusting a directivity of the electronic device 100 based on the determined audio playback parameter. That is, an off-axis frequency response of the electronic device 100 may be adjusted based on the determined audio playback parameter. This improves the performance of the electronic device 100, and thus improves a listening experience, compared to a case in which the location of the electronic device 100 within the environment is not taken into account when adjusting the directivity of the electronic device 100.

In embodiments, the method 400 comprises a step (not shown) comprising adjusting a playback time of the electronic device 100 based on the determined audio playback parameter. By adjusting a time at which the electronic device 100 is to perform playback, based on the location of the device 100 in the environment, synchronisation of playback between the electronic device 100 and one or more other audio playback devices in the environment may be improved, thereby improving a listening experience.

In embodiments, processing the received data comprises outputting the received data to a further entity, separate from the electronic device 100, the further entity comprising the artificial neural network. In some such embodiments, the method 400 comprises a step (not shown) comprising receiving the output data from the further entity. As such, in embodiments, the artificial neural network is not stored, and/or does not run, on the electronic device 100 itself. This reduces an amount of computing resources (e.g. processing resources and/or memory) that the electronic device 100 is required to have. For example, the relatively resource-intensive processing associated with the artificial neural network may be off-loaded to the further entity.

In embodiments, the further entity comprises a server 220. Therefore, the electronic device 100 may send the data representing the measurement of the impulse response of the environment to the server 220, and the server 220 inputs the data to the artificial neural network and sends the result (i.e. the output data) to the electronic device 100, to control operation of the electronic device 100. The server 220 may have more computing resources than the electronic device 100, and thus storing and/or running the artificial neural network on the server 220 may be more efficient than storing and/or running the artificial neural network on the electronic device 100. In alternative embodiments, the further entity comprises an audio playback device 230 configured to perform playback of audio content. For example, the audio playback device 230 comprising the artificial neural network may comprise a master audio playback device and the electronic device 100 may comprise a slave audio playback device, where the master device has a greater amount of computing resources than the slave device. The audio playback device 230 may be located in the same environment as the electronic device 100 or in a different environment.

In embodiments, the electronic device 100 comprises the artificial neural network. In some such embodiments, processing the received data comprises generating the output data using the artificial neural network. As such, in some embodiments, all processing may be performed on the electronic device 100 itself, and there is no need for communication between the electronic device 100 and other entities (e.g. a server or a further audio playback device). The method 400 may thus be performed on the electronic device 100 in isolation.

In embodiments, the data representing the measurement of the impulse response of the environment is received via a microphone 120. In some such embodiments, the method 400 comprises a step (not shown) comprising measuring, using the microphone 120, the impulse response of the environment. Measuring the impulse response of the environment may comprise measuring the frequency response of the environment. In embodiments, the electronic device 100 comprises the microphone 120. That is, the electronic device 100 may comprise a built-in microphone. Accordingly, the electronic device 100 may be capable of measuring the impulse response of its environment and processing the result to determine (e.g. adjust) its audio playback parameter accordingly. This enables the electronic device 100 to auto-calibrate in a self-contained manner, without the need for a separate microphone or other device such as a mobile phone. This also provides more accurate and/or reliable localisation results, because there is no need for user input, e.g. to position a microphone or to use a mobile phone app to measure impulse responses. In embodiments, the electronic device 100 comprises a plurality of microphones. This enables more measurements of the impulse response of the environment to be obtained, thereby increasing the accuracy and/or reliability of the determination of the location of the electronic device 100. In alternative embodiments, the microphone 120 is separate from (i.e. not comprised in) the electronic device 100. For example, the microphone 120 may be comprised in a further audio playback device. In such embodiments, the electronic device 100 may receive the data representing the measurement of the impulse response from the further audio playback device.

In embodiments, measuring the impulse response of the environment comprises outputting a test audio signal via the loudspeaker 110 of the electronic device 100. Such a test audio signal may comprise a sine sweep signal, or a single tone, for example. In alternative embodiments, the test audio signal is outputted from a further loudspeaker, which may or may not be comprised in the electronic device 100. In embodiments, measuring the impulse response of the environment comprises outputting audio content such as music via the loudspeaker 110. For example, the frequency or impulse response of the environment may be measured based on a song played by the electronic device 100.

In embodiments, the environment is a room. For example, the environment may be a room within a house or other building. As such, the output data (generated using the measurement of the impulse response of the room) indicates the location, within the room, of the electronic device 100. This is different from merely determining which room the electronic device 100 is in; rather, it is the specific location within the room that is used as the basis for determining the audio playback parameter of the electronic device 100.

In embodiments, the location of the electronic device 100 within the environment determined using the artificial neural network is defined using co-ordinates in a three-dimensional co-ordinate system, e.g. an (x, y, z) position of the device 100 within the environment is estimated. In other embodiments, the location is defined using co-ordinates in a two-dimensional co-ordinate system, e.g. an (x, y) position of the device 100 within the environment is estimated. That is, the height of the electronic device 100 may be determined and/or taken into account in some embodiments, but not others.

In embodiments, the method 400 comprises a step (not shown) comprising causing the electronic device 100 to perform playback of the audio content, via the loudspeaker 110, based on the determined audio playback parameter. A listening experience is thus improved, because the audio playback parameter has been determined based on the location of the electronic device 100 within the environment. In alternative embodiments, the method 400 does not comprise a step of performing playback of the audio content. For example, the method 400 may be part of an initial calibration or configuration process of the electronic device 100, separate from (e.g. prior to) the use of the electronic device 100 to perform playback of audio content. In such embodiments, future playback of audio content may be improved by determining the audio playback parameter in the described manner.

In embodiments, the method 400 comprises a step (not shown) comprising receiving, from an additional electronic device located in the environment, data representing an additional measurement of an impulse response of the environment. The additional measurement of the impulse response may be performed at a same location or a different location as the measurement of the impulse response received in step 410. In some such embodiments, the output data is obtained based on the additional measurement received from the additional electronic device. For example, the artificial neural network may be configured to take as inputs both the measurement of the impulse response of the environment received in step 410, and an additional measurement of the impulse response received from the additional electronic device. This may improve an accuracy and/or reliability of the determination of the location of the electronic device 100 in the environment, compared to a case in which additional impulse response measurements from other devices are not used. The additional electronic device may comprise an audio playback device, such as the further electronic device 230 described above with reference to Figure 2. The additional electronic device may comprise a mobile phone, for example. In alternative embodiments, the additional electronic device is not an audio playback device. In further alternative embodiments, additional measurements of impulse responses are not received from additional electronic devices in the environment.

In embodiments, the method 400 comprises a step (not shown) comprising sending the obtained output data to a further electronic device located in the environment. The further electronic device is operable to perform playback of audio content based on the obtained output data. As such, the further electronic device is an audio playback device, such as the further electronic device 230 described above with reference to Figure 2. The further electronic device may be the same as or different from the additional electronic device (operable to provide an additional impulse response measurement) mentioned above. By providing the obtained output data to the further electronic device, the playback performance of the further electronic device may be improved. For example, the further electronic device may be configured to infer its own location in the environment based on the determined location of the electronic device 100 (e.g. based on a known or predetermined distance between the two devices), and to optimise its playback parameters accordingly.

In embodiments, the method 400 comprises a step (not shown) comprising receiving image data representing an image of at least part of the environment. In some such embodiments, the output data is obtained based on the received image data. The image data may be used in addition to the measurement of the impulse response of the environment to determine the location of the electronic device 100 within the environment, thereby improving an accuracy and/or reliability of the determination. In embodiments, the image data is received via a camera, e.g. a true depth camera. Such a camera may be comprised in the electronic device 100 or may be separate from the electronic device 100. In alternative embodiments, image data is not used to generate the output data. That is, the output data may be generated solely on the basis of the measured impulse response of the environment.

In embodiments, the method 400 is performed in response to performance of a predetermined user action. For example, the method 400 may be performed in response to a user actuating a "calibration" button on the electronic device 100, issuing a predetermined voice command, powering on the electronic device 100, etc. In alternative embodiments, the method 400 is performed in response to a determination that the location of the electronic device 100 has changed. That is, the electronic device 100 may sense, through use of one or more sensors, that it has moved to a new environment or to a new location within a given environment, and may perform re-calibration accordingly. In embodiments, the method 400 is performed periodically, e.g. once per week.

An artificial neural network (ANN) refers herein to a neural network having any arbitrary architecture, network size or depth. The ANN can comprise any combination of weights connected in a network and having one or more activation functions. Using an ANN to perform device localisation based on measured impulse responses increases an accuracy, reliability and/or efficiency of device localisation (i.e. estimating the location of the electronic device 100 within its environment) compared to other techniques, particularly but not exclusively those techniques requiring user input. By using an ANN to estimate the location of the electronic device 100 within its environment, the localisation process is learnable, e.g. by using gradient descent and back-propagation of errors applied in a training phase on input training data. Such training data may be include measured impulse responses of different environments measured at different locations within such environments. The ANN may be configured to extract representative features from the measured impulse responses, and use such features to classify the location of the device within an environment. Training the ANN may involve, for example, comparing estimated device locations with actual device locations, and minimising one or more losses accordingly. In particular, training the ANN may comprise back-propagating errors computed at the output layer, using gradient descent methods. The errors of intermediate layers may be computed from errors of subsequent layers which, in turn, are computed ultimately from errors between neural network outputs and training data that are known a-priori. These latter errors between network outputs and training data are evaluated with a loss function, which evaluates the neural network prediction error during the training process.

Training of the ANN may be performed on the electronic device 100 or separately from the electronic device 100. For example, the electronic device 100 may be provided with a pre-trained ANN configured to determine locations within environments based on measurements of impulse responses. Accuracy and/or reliability may be further increased in scenarios where device localisation is based on short test signals. Further, end-to-end training may be more readily employed through the use of ANNs compared to techniques which do not use ANNs. Training data sets, neural network architectures, objective functions and/or activation functions may be adjusted in order to optimize the accuracy of the localisation results produced by the ANN.

As discussed above, in some embodiments, the ANN is stored "on board" the electronic device 100, e.g. in the memory 360. In such embodiments, the controller 310 of the electronic device 100 may process data using the ANN to generate output data for use in determining the audio playback parameter of the electronic device 100. In some cases, the electronic device 100 may comprise a dedicated processor for the ANN. In other embodiments, the ANN is not stored on the electronic device 100. For example, the ANN may be stored in a network element such as a server, and/or a remote device communicatively coupled to the electronic device 100 via one or more networks.

In embodiments, the ANN comprises a convolutional neural network (CNN). A CNN may comprise a series of convolution layers and pool layers, followed by one or more fully connected layers and then a final output layer, e.g. using a softmax or rectified linear unit (ReLu) activation function. One or more shortcut (or "skip") connections may be provided to allow information to bypass intermediate layers. A CNN may provide higher accuracy than other types of neural network. In embodiments, the ANN comprises a Gaussian mixture model (GMM) or a combination of a GMM and a CNN. For example, a CNN may be used initially to maximise probabilities for location determination, and a GMM may then be used to minimise errors. Other types of ANN and/or architectures may be used in other embodiments.

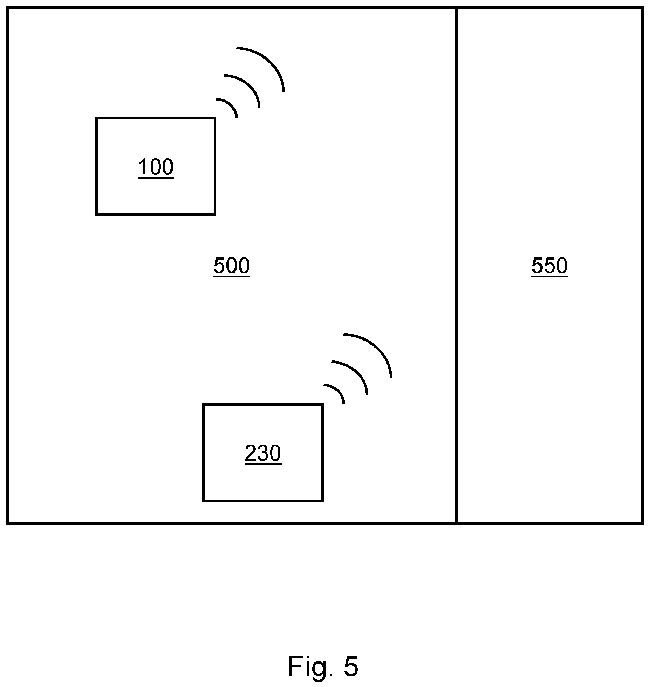

Figure 5 shows schematically an environment 500 according to embodiments. The environment 500 comprises a room, such as a bedroom or living room. Two audio playback devices, namely the electronic device 100 and the further electronic device 230, are located within the environment 500. In this example, for simplicity, the electronic device 100 and the further electronic device 230 are the same type of device, e.g. a set of two identical speakers. In other examples, the electronic device 100 and the further electronic device 230 are different types of device. A further environment (e.g. a further room) 550 is located adjacent the environment 500. The further environment 550 may also comprise one or audio playback devices (not shown).

Audio signals produced by the electronic device 100 and audio signals produced by the further electronic device 230 interact with the environment 500 in different ways, because the electronic device 100 is positioned at a different location within the environment 500 compared to the further electronic device 230. As such, a set of audio playback parameters that are optimal for one of the devices 100, 230 may not be optimal for the other one of the devices 100, 230. Further, an impulse response of the environment 500 measured at (e.g. by) the electronic device 100 may be different than an impulse response of the environment 500 measured at (e.g. by) the further electronic device 230, because the two devices 100, 230 are at different locations in the environment 500. As described herein, an artificial neural network may be trained to infer the location of a given device in the environment 500 from a measurement of the impulse response of the environment, since the measured impulse response is dependent on the location at which it is measured. Knowledge of the location of the device may then be used to determine an optimal set of audio playback parameters for the device, for example an optimal frequency response of the device, in order to improve the perceived audio quality of audio signals produced by the device.

The artificial neural network may be trained using training data. The training data may comprise 'real-world' data, e.g. impulse responses measured in real environments. Additionally or alternatively, the training data may comprise `artificially produced' training data. Such data may be produced using a model that is configured to input room dimension, position and/or absorption values (which may be randomly generated, for example) and to generate artificial impulse responses accordingly. This may be beneficial particularly where a large amount of 'real-world' training data is unavailable. Such data may comprise time sequence data, which may (optionally) be transformed into a frequency domain using an FFT. In some cases, the training data comprises a combination of 'real-world' impulse response data and artificially produced impulse response data. Similarly, for testing the trained artificial neural network, 'real-world' impulse responses and/or artificially generated impulse responses may be used as inputs.

In embodiments, the artificial neural network uses at least one Long-Short Term Memory (LSTM) architecture. This architecture may be particularly suited to handling sequential input data, such as time sequence and/or frequency sequence data. LSTM blocks may comprise three sections, or 'gates', and three inputs: the current time input, the hidden state (short term memory) and cell state (long term memory). A 'forget' gate decides how much of the previous hidden state to keep by taking the current input and the previous block output, applying their corresponding weights, and feeding them through a sigmoid activation function. This decides what percentage of the long term memory to keep. The input gate decides the new potential long term memory value to add based on the previous short term memory, and is divided into two parts. The first half takes the same inputs as before, applies their corresponding weights, adds a bias value and applies a tanh function. This represents the value to be added to the long term memory. The second half decides what percentage of this new value is actually added to the long term memory. The same inputs are used, weights applied as before, a bias term added, and then passed through a sigmoid function. The outputs of the two parts are multiplied to give the final new long term memory value to add, and this is added to the long term memory. The output is also divided into two parts. The first part takes the new long term memory and feeds it through a tanh function, deciding the new value to add to the short term memory. The second part decides the percentage as before, taking the same inputs, applying weights, applying a sigmoid activation function, and multiplying the result with the output of the first part. This is then outputted as the new hidden state (short term memory). An alternative to an LSTM network is a Gated Recurrent Unit (GRU) network, which tends to have fewer parameters and may thus be faster to train than an LSTM network.

It is to be understood that any feature described in relation to any one embodiment and/or aspect may be used alone, or in combination with other features described, and may also be used in combination with one or more features of any other of the embodiments and/or aspects, or any combination of any other of the embodiments and/or aspects.

In embodiments of the present disclosure, the electronic device 100 comprises a controller 310. The controller 310 is configured to perform various methods described herein. In embodiments, the controller comprises a processing system. Such a processing system may comprise one or more processors and/or memory. Each device, component, or function as described in relation to any of the examples described herein, for example the server 220, further electronic device 230, loudspeaker 110, microphone 120 and communications unit 205, may similarly comprise a processor or may be comprised in apparatus comprising a processor. One or more aspects of the embodiments described herein comprise processes performed by apparatus. In some examples, the apparatus comprises one or more processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The one or more processors of processing systems may comprise a central processing unit (CPU). The one or more processors may comprise a graphics processing unit (GPU). The one or more processors may comprise one or more of a field programmable gate array (FPGA), a programmable logic device (PLD), or a complex programmable logic device (CPLD). The one or more processors may comprise an application specific integrated circuit (ASIC). It will be appreciated by the skilled person that many other types of device, in addition to the examples provided, may be used to provide the one or more processors. The one or more processors may comprise multiple co-located processors or multiple disparately located processors. Operations performed by the one or more processors may be carried out by one or more of hardware, firmware, and software. It will be appreciated that processing systems may comprise more, fewer and/or different components from those described.

The techniques described herein may be implemented in software or hardware, or may be implemented using a combination of software and hardware. They may include configuring an apparatus to carry out and/or support any or all of techniques described herein. Although at least some aspects of the examples described herein with reference to the drawings comprise computer processes performed in processing systems or processors, examples described herein also extend to computer programs, for example computer programs on or in a carrier, adapted for putting the examples into practice. The carrier may be any entity or device capable of carrying the program. The carrier may comprise a computer readable storage media. Examples of tangible computer-readable storage media include, but are not limited to, an optical medium (e.g., CD-ROM, DVD-ROM or Blu-ray), flash memory card, floppy or hard disk or any other medium capable of storing computer-readable instructions such as firmware or microcode in at least one ROM or RAM or Programmable ROM (PROM) chips.

Where in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the present disclosure that are described as preferable, advantageous, convenient or the like are optional and do not limit the scope of the independent claims. Moreover, it is to be understood that such optional integers or features, whilst of possible benefit in some embodiments of the present disclosure, may not be desirable, and may therefore be absent, in other embodiments.

## Claims

1. A method of operating an electronic device comprising a loudspeaker, the electronic device being operable to perform playback of audio content, via the loudspeaker, based on an audio playback parameter of the electronic device, the method comprising:
receiving data representing a measurement of an impulse response of an environment in which the electronic device is located;
processing the received data to obtain output data indicative of a location, within the environment, of the electronic device, wherein the output data is obtained via an artificial neural network trained to determine the location using the measurement of the impulse response; and
determining the audio playback parameter of the electronic device based on the obtained output data.

2. A method according to claim 1, wherein the obtained output data is indicative of one or more dimensions of the environment.

3. A method according to any preceding claim, wherein the obtained output data is indicative of a size of the environment.

4. A method according to any preceding claim, wherein the obtained output data is indicative of one or more acoustic characteristics of the environment.

5. A method according to any preceding claim, wherein the artificial neural network is configured to generate the output data using as an input only a single measurement of the impulse response of the environment.

6. A method according to any preceding claim, wherein the received data represents a single measurement of the impulse response of the environment.

7. A method according to any preceding claim, wherein processing the received data comprises transforming the received data into a frequency domain.

8. A method according to any preceding claim, wherein the audio playback parameter comprises a frequency and/or time response of the electronic device.

9. A method according to any preceding claim, the method comprising at least one of:
applying an equalization curve to the electronic device based on the determined audio playback parameter; and
adjusting a directivity of the electronic device based on the determined audio playback parameter.

10. A method according to any preceding claim,
wherein processing the received data comprises outputting the received data to a further entity, separate from the electronic device, the further entity comprising the artificial neural network, and
wherein the method comprises receiving the output data from the further entity, and optionally wherein the further entity comprises one of: a server; and an audio playback device configured to perform playback of audio content.

11. A method according to any preceding claim,
wherein the data representing the measurement of the impulse response of the environment is received via a microphone, and
wherein the method comprises measuring, using the microphone, the impulse response of the environment, and optionally wherein the electronic device comprises the microphone.

12. A method according to any preceding claim,
wherein the method comprises receiving, from an additional electronic device located in the environment, data representing an additional measurement of an impulse response of the environment, and
wherein the output data is obtained based on the additional measurement received from the additional electronic device.

13. A method according to any preceding claim,
wherein the method comprises receiving image data representing an image of at least part of the environment, and
wherein the output data is obtained based on the received image data.

14. An electronic device comprising:
a controller; and
a loudspeaker, the electronic device being operable to perform playback of audio content, via the loudspeaker, based on an audio playback parameter of the electronic device,
wherein the controller is configured to:
receive data representing a measurement of an impulse response of an environment in which the electronic device is located;
process the received data to obtain output data indicative of a location, within the environment, of the electronic device, wherein the output data is obtained via an artificial neural network trained to determine the location using the measurement of the impulse response; and
determine the audio playback parameter of the electronic device based on the obtained output data.

15. A computer program comprising a set of instructions which, when executed by a computerised device, cause the computerised device to perform a method of operating an electronic device, the electronic device comprising a loudspeaker, the electronic device being operable to perform playback of audio content, via the loudspeaker, based on an audio playback parameter of the electronic device, the method comprising:
receiving data representing a measurement of an impulse response of an environment in which the electronic device is located;
processing the received data to obtain output data indicative of a location, within the environment, of the electronic device, wherein the output data is obtained via an artificial neural network trained to determine the location using the measurement of the impulse response; and
determining the audio playback parameter of the electronic device based on the obtained output data.
